# EUROPÄISCHE PATENTSCHRIFT

(11) **EP 1 573 261 B1**
(45) Veröffentlichungstag und Bekanntmachung des Hinweises auf die Patenterteilung: **17.12.2008**
(21) Anmeldenummer: 03795952.5
(22) Anmeldetag: 22.12.2003
(51) Int. Cl.: F28D 20/02

(54) **VERFAHREN ZUM HERSTELLEN VON ELEMENTEN AUS LATENTWÄRMESPEICHERNDEM MATERIAL**
METHOD FOR PRODUCING ELEMENTS FROM PHASE CHANGE MATERIAL
PROCEDE DE FABRICATION D'ELEMENTS EN MATERIAU STOCKANT DE LA CHALEUR LATENTE

(30) Priorität: 20.12.2002 DE 10261208
(43) Veröffentlichungstag der Anmeldung: 14.09.2005
(73) Patentinhaber: EWALD DÖRKEN AG, 58313 Herdecke (DE)
(72) Erfinder: JABLONKA, Dieter, 58313 Herdecke (DE); MERTENS, Michael, 58313 Herdecke (DE); SCHEPERS, Eberhard, 58313 Herdecke (DE)
(74) Vertreter: Wenzel & Kalkoff
(86) Internationale Anmeldenummer: PCT/EP2003/014758
(87) Internationale Veröffentlichungsnummer: WO 2004/057259

(56) Entgegenhaltungen:
- EP-A- 1 371 915
- FR-A- 2 830 077
- US-A- 4 259 401
- US-A- 5 770 295
- US-A1- 2003 129 330

## Beschreibung

Die Erfindung betrifft ein Verfahren zum Herstellen von Elementen aus oder mit latentwärmespeicherndem Material - nachfolgend mit der Abkürzung "PCM" bezeichnet -, die mit **einem Schlauch** versehen werden, und ebenso Elemente aus oder mit PCM.

Dabei umfaßt der Begriff "Element" PCM in jeder Form, Art, Konsistenz, Farbe, Teilchengröße, nämlich Körper wie Platten, Profile, Rohre, Blöcke, Kugeln, Körner, Kissen, Pulver etc.

Aus der US-PS 5,770,295 sind Strukturen und Komponenten zur Wärmeisolierung von Räumen von Gebäuden bekannt, in denen PCM-Werkstoffe für eine Regulierung der Temperaturbedingungen in den Räumen angewendet werden. PCM-Werkstoffe werden nach verschiedenen Verfahren, bspw. durch Tränken von Bahnen in PCM-Bädern oder durch Aufsprühen von flüssigem PCM auf Isolierstoffe oder durch Einbringen umhüllter PCM-Kügelchen in Bauelemente mit schaumförmiger Struktur, mit Trägern verbunden oder in diese eingebunden. Die PCM-Träger werden grundsätzlich nur als Zwischenschicht zwischen zwei Isolierstoffschichten zur Wärmeisolierung von Räumen eingebracht. Aus US 4,259,401 sind PCM Element bekannt, wobei das PCM Material in Schläuche gegeben wenden kann.

Diesem Stand der Technik gegenüber besteht die Aufgabe, ein Verfahren vorzusehen, mit dem sich möglichst wirtschaftlich Elemente aus oder mit PCM herstellen lassen, die sich für einen breiten Anwendungsbereich eignen und eine einfache Verarbeitung gestatten.

Ausgehend von einem Verfahren der eingangs genannten Art wird diese Aufgabe erfindungsgemäß dadurch gelöst, daß
- **der Schlauch aus einem Kunststoffmaterial extrudiert wird,**
- PCM kontinuierlich oder taktweise zugeführt wird,
- **PCM in den frisch extrudierten Schlauch eingefüllt bzw. eingeführt wird**
- der PCM-gefüllte Schlauch in Schlauchabschnitte unterteilt oder gespeichert z. B. aufgespult wird.

Dabei kann PCM flüssig oder als Granulat oder als Strang stückweise oder endlos zugeführt werden. Je nach Verwendungszweck kann der PCM-gefüllte Schlauch flexibel oder formstabil sein.

Der Schlauch besteht zweckmäßig aus diffusionsdichtem Kunststoff, damit aus der Umhüllung kein PCM entweichen und umgekehrt keine Partikel von außen in das Innere des Schlauches eindringen können. Bei PCM auf Paraffinbasis kommt als Kunststoff z. B. Polyamid (PA) insbesondere zum Herstellen eines flexiblen Schlauches in Betracht. Für den Fall der Verwendung von PCM auf Salzbasis kann als Kunststoffmaterial für einen flexiblen Schlauch Polyethylen (HDPE) oder Polypropylen (PP) oder auch hierfür Polyamid (PA) verwendet werden. Die Querschnittsform des Schlauches entspricht dem Verwendungszweck. Das gleiche gilt für die Querschnittsgröße, die wenige Quadratmillimeter oder aber - je nach gewünschter Speicherkapazität pro Längeneinheit - erheblich größere Flächen umfassen kann.

Zur Herstellung von PCM-Elementen in größerem Maßstab wird der Schlauch in der Herstellungsanlage extrudiert und PCM in den frisch extrudierten Schlauch eingefüllt bzw. einführt wird. Bevorzugt soll der Schlauch nach Verlassen der Extruderdüse und vor dem Eintritt in eine Kühlzone mit PCM - vorzugsweise in flüssiger Form - gefüllt werden. Es ist auch möglich, PCM als Strang in festem Zustand mit vorgegebenem Querschnitt, bspw. mit einem flachovalen Querschnitt, zuzuführen, und den Strang zum Herstellen einer Umhüllung durch ein Bad zu führen oder die Umhüllung durch Aufsprühen von flüssigem Kunststoffherzustellen. Bevorzugt wird jedoch, wie vorstehend angegeben, das Einfüllen von flüssigem PCM in einen Schlauch, der kontinuierlich aus einer Extruderdüse austritt und bereits eine zum Einfüllen von flüssigem PCM ausreichende Formstabilität besitzt. PCM wird dabei vorzugsweise zentral durch die Extruderdüse in den sich bildenden Schlauch hinein zugeführt, zweckmäßig mit vertikaler Arbeitsrichtung.

Je nach Verwendungszweck wird der Schlauch nach dem Befüllen mit PCM, nämlich mit PCM-Granulat oder bevorzugt mit PCM in flüssigem Zustand, in Schlauchabschnitte geeigneter Länge unterteilt oder auf einem Träger wie einer Spule gespeichert zwecks Weiterverarbeitung an anderer Stelle. Die Länge der Schlauchabschnitte hängt ebenfalls von ihrem Verwendungszweck ab und kann wenige Millimeter oder auch mehrere Meter betragen. In jedem Fall ist der gewählte PCM-Werkstoff sicher umhüllt, und die PCM-gefüllten Schlauchabschnitte können der Weiterverarbeitung zugeführt werden.

Der PCM-gefüllte Schlauch aus Kunststoff kann zur Bildung der Schlauchabschnitte an vorgegebenen Stellen eingeschnürt, und die Einschnürungen können verschweißt werden. Dieser Verfahrensschritt führt zu aus Schlauchabschnitten bestehenden Schnüren, die, wie noch beschrieben wird, zur Herstellung von Isolier- und/oder Wärmespeicherelementen weiterverarbeitet werden können. Alternativ hierzu können die PCM-gefüllten Schlauchabschnitte an den Engstellen auch voneinander getrennt werden, wobei zweckmäßig die Einschnürungen durchtrennt werden, und zwar so, daß die Enden der Schlauchabschnitte verschweißt bleiben.

Für die Bildung der Schlauchabschnitte durch Einschnüren der Schläuche an vorgegebenen Stellen und für das Verschweißen der Einschnürungen sind verschiedene Verfahren anwendbar. Man kann den PCM-gefüllten Schlauch vor allem durch eine Presse führen und die Einschnürungen und Verschweißungen dabei mittels temperierter Preßwerkzeuge herbeiführen. Dabei kann der Schlauch taktweise mit hin- und hergehenden Preßwerkzeugen an den vorgegebenen Stellen eingeschnürt und verschweißt werden. Alternativ kann der Schlauch zum Einschnüren und Verschweißen zwischen zwei gegenläufigen mit Druck- und Schweißwerkzeugen besetzten Raupen hindurchtransportiert werden. Nach einer weiteren Alternative wird der Schlauch zwischen zwei am Umfang mit Druck- und Schweißwerkzeugen besetzten Rädern hindurchtransportiert. In jedem Fall handelt es sich um insbesondere für eine kontinuierliche Herstellung geeignete und wirtschaftliche Verfahren zur Herstellung von Schlauchabschnitten nahezu beliebiger Größen, was die Schlauchlängen und ihre Querschnittsgröße und auch Querschnittsform anbelangt.

So läßt sich aus von dem Strang abgetrennten Schlauchabschnitten bspw. ein Granulat aus PCM-gefüllten Kissen herstellen. Mit dem Granulat können vorgegebene Hohlräume in Wänden von Bauwerken zur Bildung von Latentwärmespeichern ebenso gefüllt werden wie Behälter oder Kammern in Bau- oder Isolierplatten.

Einzelne oder als Strang zusammenhängende, PCM-gefüllte Schlauchabschnitte können jedoch auch auf einem Träger z. B. einem Vlies aus Kunststoff oder auf einer Folie aus Kunststoff, die mehr oder weniger flexibel ist, befestigt werden, um so Bau- oder Isolierelemente herzustellen, mit denen die Eigenschaften von PCM als Wärmespeicher nutzbar gemacht werden können.

Dabei lassen sich die Schlauchabschnitte parallel nebeneinander an dem Vlies oder an der Folie anordnen.

Flexible Träger mit PCM-gefüllten Schlauchabschnitten lassen sich vor allem als Produkte für Bauzwecke durch Aufwickeln leicht speichern, transportieren, handhaben und auf passende Länge schneiden. Für andere Bedarfsfälle sind formstabile Folien als Träger der Schlauchabschnitte vorzuziehen.

Besonders vorteilhaft ist es, die PCM-gefüllten Schlauchabschnitte zwischen einem Vlies und einem Film in einem Schichtaufbau anzuordnen und zu positionieren. Ein derartiges Halbfertigprodukt läßt sich in industriellem Rahmen wirtschaftlich bspw. so herstellen, daß ein endloses Vlies und ein endloser Strang aus PCM-gefüllten Schlauchabschnitten im Spalt eines Walzenpaares zusammengeführt und dort miteinander verbunden sowie auf der dem Vlies abgewandten Seite mit dem Film aus einer Extruderdüse beschichtet werden. Zweckmäßig geht die Herstellung des endlosen Stranges aus PCM-gefüllten Schlauchabschnitten der Herstellung einer solchen endlosen Bahn mit PCM-gefüllten Schlauchabschnitten unmittelbar voraus, so daß die Herstellung dieses mehrschichtigen Bahnmaterials in einer Herstellungsanlage erfolgen kann. Bei der Herstellung des Bahnmaterials kann der Film jeweils über die Schlauchabschnitte bis zu dem Vlies gezogen und zwischen benachbarten Schlauchabschnitten an dem Vlies befestigt werden. Auf diese Weise erhält jeder Schlauchabschnitt durch den Film an den Stellen, die nicht von dem Vlies bedeckt sind, eine Schutzschicht, mit der jeder Schlauchabschnitt gleichzeitig in der gewünschten Position am Vlies befestigt wird. Hierfür können ein endloses Vlies und einzeln aus einem Magazin zugeführte Schlauchabschnitte im Spalt eines Walzenpaares zusammengeführt und die Schlauchabschnitte dort mit dem Film aus einer Extruderdüse beschichtet und durch Verkleben des Films an dem Vlies zwischen den Schlauchabschnitten fixiert werden.

Erfindungsgemäße Elemente und Weiterbildungen hierfür sind Anspruch 17-26 zu entnehmen. Die Elemente bilden - je nach Ausführung - Fertig- oder Halbfertigprodukte und sind insbesondere für Bauzwecke bestimmt. Eine typische Anwendung erfindungsgemäßer Elemente wird nachstehend am Beispiel von Leichtbaukonstruktionen erläutert.

Industriebauten wie Produktions- und Lagerhallen etc. werden heute zu einem erheblichen Teil als Leichtbaukonstruktionen errichtet. Sie bestehen aus Stahlkonstruktionen, die anschließend im Wand- und Dachbereich je nach Bedarf gedämmt und verkleidet werden.

Das Dach von Leichtbaukonstruktionen besteht in der Regel aus mit Kunststoff beschichteten Trapezblechprofilen, die auf der tragenden Stahlkonstruktion aufliegen und mit ihr verschraubt werden. Die Profiltafeln werden untereinander mit Nieten verbunden. Die Trapezbleche sind nach dem Verlegen biegesteif und begehbar. Oberhalb der Trapezbleche sind als weiterer Dachaufbau üblicherweise eine Dampfsperre z.B. aus einer selbstklebenden dicken Folie, eine Wärmedämmung mit einer Schichtdicke von ca. 160 mm und schließlich eine Flachdachabdichtung aus zwei Lagen Bitumenbahn oder einer Lage einer geeigneten Kunststoff-Dichtungsbahn vorgesehen.

Zur Verbesserung der Wärmedämmung können sog. Sickenfüller aus Dämmstoff, die auf die Form der Tiefsicke zugeschnitten sind, eingelegt werden. Zur Verbesserung des Schallschutzes von Industrieleichtdächern kann das Blech im Bereich der Tiefsicke gelocht werden, und in die Tiefsicke selbst kann ein Dämmstoffstreifen eingelegt werden.

Das Temperaturverhalten von Leichtbaukonstruktionen ist problematisch, weil sich die Gebäude im Sommer bei hohen Temperaturen rasch aufheizen und im Winter schnell auskühlen.

Die Erfindung ermöglicht, den bei Leichtbaukonstruktionen durch die Tiefsicken der Schicht bzw. der Trapezblechprofile zur Verfügung stehenden Raum zur Aufnahme einer Speichermasse für die Aufnahme von Wärmeenergie zu nutzen. Im Gegensatz zu Massivbauteilen mit erheblichem Gewicht, die ebenfalls als Wärmespeicher in Betracht kommen, jedoch die Tragfähigkeit der Leichtbaukonstruktion überfordern würden, lassen sich Elemente mit PCM gezielt auswählen und in einfacher Weise in die Tiefsicken der Profilschicht einbringen. An heißen Tagen im Sommer würden diese Wärmespeicher eine Reduzierung der Temperatur unterhalb des Blechdaches bewirken, während sie bei kühlen Nachttemperaturen Wärme abgeben, so daß sie insgesamt ein ausgeglichenes Klima im Innenraum herbeiführen.

Die Erfindung wird zur Verdeutlichung überwiegend mit Bezug auf Trapezblechprofile für die Dächer von Leichtbaukonstruktionen erläutert, obwohl die Anwendung der erfindungsgemäßen Elemente hierauf keineswegs beschränkt ist.

PCM kann aus einer Vielzahl von Elementen mit Umhüllung bestehen, und es ist vorzugsweise in Hohlräumen wie Kammern, Waben oder dergleichen angeordnet. Je nach Materialart können die PCM-Elemente auch als Granulat in Hohlräume wie in die Tiefsicken von Trapezblechprofilen eingebracht werden. Die Elemente können jedoch auch aus Strängen, die sich leicht ablängen lassen, bestehen.

Die Wirkung des PCM als ausgleichendem Element zwischen hohen und niedrigen Umgebungstemperaturen ist besonders nachhaltig, wenn die Phasenumwandlungstemperatur des PCM im Bereich von 15 - 40°C, insbesondere im Bereich von 20 - 35°C liegt. In der Auswahl des PCM sind dabei die am Einsatzort der Schicht auftretenden Temperaturen zu beachten, damit die Phasenumwandlungswärme des PCM zum Ausgleichen der unterschiedlichen Temperaturen benutzt werden kann. In einem angenommenen Anwendungsfall, wenn z.B. kühle Außentemperaturen von ca.10°C auf ein erfindungsgemäß ausgerüstetes Flachdach und damit auch auf die entsprechende Schicht zur Einwirkung kommt, befindet sich das PCM im festen bzw. erstarrten Zustand. Wenn die Phasenumwandlungstemperatur dieses Materials 25°C beträgt, setzt folglich bei Eintreten höherer Umgebungstemperaturen im Bereich von z.B. 25 - 30°C der Übergang des PCM von der festen in die flüssige Phase mit entsprechender Wärmeaufnahme bzw. mit entsprechendem Energieverbrauch mit der Folge ein, daß die Aufheizung der Schicht und damit des Innenraums entsprechend verzögert wird. Je mehr PCM eingesetzt wird und je höher die Wärmespeicherkapazität des Materials ist, desto länger behält der Innenraum ein angenehmes Klima. Umgekehrt kühlt sich der Innenraum abends bzw. in der Nacht wesentlich langsamer ab und erreicht eine entsprechend geringere Reduzierung der Innentemperatur, wenn die Elemente aus PCM unter der Einwirkung von unter die Phasenumwandlungstemperatur von 20°C absinkenden Temperaturen Phasenumwandlungswärme über längere Zeit abgeben, bis sie ggf. je nach Einwirkdauer gänzlich in die starre Phase übergehen. Während sie Phasenumwandlungswärme abgeben, verhindern sie ein abruptes Absinken der Temperaturen im Bereich der Schicht und damit im Innenraum.

Das PCM ist in den Elementen in den Hohlräumen, insbesondere in den Tiefsicken oder Kammern, gegenüber der Umgebung durch eine Barriere abgedichtet, insbesondere von einer abdichtenden, vor allem auch diffusionsdichten Umhüllung umschlossen. Die Umhüllung dient sowohl zum Schutz des PCM, das z. B. andernfalls verdunsten oder in seiner Funktion durch in die Umhüllung eindringende andere Stoffe beeinträchtigt werden kann, als auch zum Verhindern eines unmittelbaren Eindringens von PCM in die Tiefsicken und von dort möglicherweise in die Umgebung.

Vorzugsweise ist die Umhüllung flexibel und läßt Formänderungen der Elemente aus PCM im pulverförmigen, körnigen, flüssigen oder pastösen Zustand zu. Eine flexible Umhüllung der Elemente z.B. als Kunststoffschlauch weist eine Reihe von Vorteilen auf wie in der Regel geringes Gewicht, leichter Transport, einfache Montage d.h. leichtes Einbringen der Elemente in die Tiefsicken, leichte Anpassung an die Form der Tiefsicken etc. Wenn beispielsweise ein PCM gewählt und mit einer geeigneten Umhüllung versehen ist, läßt es sich sowohl im geschmolzenen als auch im festen Zustand in die Tiefsicke einbringen. Falls tiefere Außentemperaturen beim Einbringen der Elemente in die Tiefsicken den festen Zustand des PCM der Elemente bewirken, erfolgt ein Schmelzen des PCM mit entsprechender Anpassung an die Form der Tiefsicke, sobald die Außentemperaturen steigen und das PCM schmilzt. Insofern wird mit zeitlicher Verschiebung eine Anpassung an die Form der Tiefsicken auch mit Elementen aus PCM im festen Zustand beim Einbringen der Elemente erreicht, wenn die Umhüllung entsprechend flexibel ist. Unter einer Anpassung an die Form der Tiefsicke wird im wesentlichen verstanden, daß z.B. ein im Querschnitt etwa kreisrundes Element mit Umhüllung nach dem Einbringen in die Tiefsicke eine abgeflachte Form am Boden der Tiefsicke einnimmt.

Die schlauchförmige Umhüllung soll im Falle längsverlaufender Hohlräume wie Tiefsicken in jeweils einzeln abgedichtete Schlauchabschnitte unterteilt sein, die einzeln und/oder in einer Reihe miteinander verbunden in den Hohlräumen angeordnet sein können. Eine in dieser Weise abschnittsweise unterteilte schlauchförmige Umhüllung mit PCM hat den Vorteil, daß beim Auftreten von Undichtigkeiten durch Beschädigungen nur einzelne Schlauchelemente und nicht die gesamte Schlauchlänge betroffen bzw. undicht sind. Darüber hinaus läßt sich die jeweils erforderliche Schlauchlänge leicht durch Abschneiden der Verbindung zwischen zwei Schlauchelementen herstellen. Außerdem stehen auf diese Weise einzelne Schlauchelemente oder auch kurze Schlauchstücke bestehend aus mehreren Schlauchelementen - auch als Granulat - für eine gleichmäßige Verteilung des PCM in den Hohlräumen bzw. Tiefsicken zur Verfügung.

Die Umhüllung des PCM aus einer reißfesten, flüssigkeits- und diffusionsdichten Kunststoff-Folie kann mehrschichtig sein. In diesem Fall wird z. B. einer Schicht, nämlich z. B. einem Gewebe oder einem Vlies die Funktion der mechanischen Festigkeit zugeordnet, während andere Schichten z. B. die Abdichtungsfunktionen übernehmen. Auf die obigen beispielhaften Werkstoffangaben für die Umhüllung bzw. für den Schlauch aus Kunststoff wird ausdrücklich Bezug genommen.

Das PCM soll eine möglichst hohe Phasenumwandlungswärme aufweisen, damit die temperaturausgleichende Wirkung des PCM zu einem weitgehend ausgeglichenen Klima im Innenraum von Gebäuden der hier betroffenen Art führt.

Das PCM kann aus einem Wachs z.B. aus einem Paraffingemisch wie EICOSAN, NONADECAN oder OKTADEKAN besteht.

Alternativ hierzu kann das PCM aus einem Salz, Salzhydrat z. B. aus Calciumchloridhexahydrat oder Lithiumnitrat-Trihydrat bestehen.

Erfindungsgemäße Elemente lassen sich jedoch keineswegs nur für Flachdächer sondern bei entsprechender Ausbildung der Elemente auch für Schrägdächer bzw. für Wände verwenden. Damit sich die Elemente unter dem Gewicht des PCM nicht verschieben, lassen sich z. B. im Falle von Wänden oder Schrägdächern oder dergleichen Struktureinlagen mit Querstegen am Boden der Hohlräume bzw. Tiefsicken einsetzen, die ein Verrutschen bzw.

Verschieben der Elemente aus bzw. mit PCM verhindern. Man kann die Elemente in den Tiefsicken auch punkt- bzw. bereichsweise festldeben, insbesondere bei vertikaler Lage der Elemente, wenn es zu verhindern gilt, daß die Elemente, insbesondere wenn sie aus einer Reihe einzeln abgedichteter Schlauchelemente bestehen, die in einer Reihe miteinander verbunden sein und sehr kurze Schlauchelemente sein können. In diesem Fall werden sie zweckmäßig als Schnüre bzw. Stränge verarbeitet (vgl. Anspruch 17 und 18).

Die Erfindung wird nachstehend mit Bezug auf die Zeichnungen näher erläutert. In den Zeichnungen zeigen:
- Fig. 1: eine schematische Darstellung einer Anlage zum Herstellen eines kontinuierlichen Stranges aus PCM-gefüllten Schlauchabschnitten;
- Fig. 2: eine schematische Darstellung einer Einzelheit Y der Anlage von Fig. 1;
- Fig. 3: eine schematische Ansicht einer Einzelheit X der Anlage von Fig. 1;
- Fig. 4: eine schematische Ansicht einer Einzelheit Z als Alternative zur Einzelheit X von Fig. 3 in der Anlage von Fig. 1;
- Fig. 5: eine schematische Draufsicht einer Anlage zum Herstellen von PCM-gefüllten Schlauchabschnitten als Granulat;
- Fig. 6: eine schematische Darstellung eines Teils einer Anlage zum kontinuierlichen Herstellen eines bahn- oder strangförmigen Halbfertigproduktes mit PCM-gefüllten Schlauchabschnitten;
- Fig. 7: eine schematische Seitenansicht eines Teils einer Anlage zum Herstellen von endlosen Bahnen mit Einbindung PCM-gefüllter Schläuche bzw. PCM-gefüllter Schlauchabschnitte;
- Fig. 8: eine Querschnittsansicht eines Gebäudeteils als Leichtbaukonstruktion mit einem Flachdach unter Verwendung von Trapezblechprofilen mit Tiefsicken, in denen Elemente aus PCM angeordnet sind;
- Fig. 9: eine schematische Darstellung eines Stranges aus PCM-Elementen in Seitenansicht.

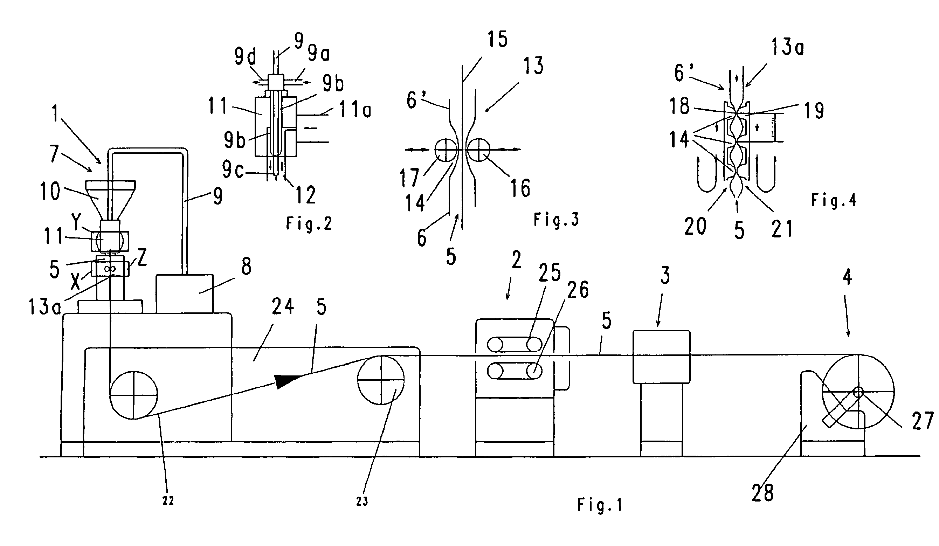

In dem in Fig. 1 dargestellten Ausführungsbeispiel einer Anlage zum kontinuierlichen Herstellen eines endlosen Stranges 5 aus PCM-gefüllten Schlauchabschnitten 6 umfaßt eine Station 1 zum Herstellen des Stranges 5, eine Station 2 für den Abzug des Stranges 5 sowie eine Station 3 zum Schneiden desselben oder eine Station 4 zum Aufwickeln des Stranges 5.

In der Station 1 wird einem Extruder 7 flüssiges PCM aus einem Behälter 8 über eine Leitung 9, wie dargestellt, zentral zugeführt. Die Transport- und Arbeitsrichtung im Extruder 7 ist vorzugsweise, wie dargestellt, vertikal. Von einer Heizvorrichtung 10 aus wird aufgeheizter Kunststoff über eine Leitung 11a einem Extruderkopf 11 zum kontinuierlichen Herstellen eines endlosen Schlauchs 12 zugeführt. Wie Fig. 2 veranschaulicht, wird das flüssige PCM unmittelbar nach Bildung des Schlauchs 12 so in diesen eingegeben, daß unterhalb des Auslasses der Extruderdüse 11 der PCM-gefüllte Strang gebildet wird.

Das über die Leitung 9 zugeführte flüssige PCM wird über ein zentral durch den Extruderkopf 11 geführtes Dosierrohr oder Zuführrohr 9c zugeführt, aus dessen unten überstehenden Ende PCM in den soeben gebildeten und noch warmen Schlauch 12 eingegeben wird. Damit das PCM bei der Durchführung durch den Extruderkopf 11 die Zuführtemperatur behält oder jedenfalls nur in zulässigen Grenzen - je nach PCM-Werkstoff - aufgeheizt wird, ist ein Kühlmittelkreislauf an und in dem Extruderkopf 11 angeordnet. Dieser besteht im vorliegenden Beispiel aus einer Leitung 9a zum Zuführen des Kühlmittels zu einem sich coaxial durch den Extruderkopf 11 erstreckenden Kühlmantel 9b, aus dem das Kühlmittel über eine Leitung 9d wieder abgeführt wird. Die eingezeichneten Pfeile verdeutlichen die Zufuhr des Kunststoff zum Extruderkopf 11 und den Austritt des Schlauchs 12 aus der Düsenöffnung ebenso wie den Austritt des flüssigen PCM aus dem unteren Ende des Zuführrohrs 9c.

Unmittelbar nach dem Befüllen des Schlauchs 12 mit flüssigem PCM durchläuft der Strang 5 eine temperierte Preßvorrichtung 13 (Fig. 3) oder 13a (Fig. 4), die in Fig. 1 mit X bzw. Z angedeutet sind. Der noch warme Strang 5 wird hier taktweise eingeschnürt und an den Einschnürungen 14 so verschweißt, daß der Strang 5 nun aus über die verschweißten Einschnürungen 14 miteinander verbundenen Schlauchabschnitten 6 besteht.

In dem Ausführungsbeispiel von Fig. 3 (Einzelheit X) werden die Einschnürungen 14 durch senkrecht zur Vorschubrichtung 15 des Stranges 5 taktweise hin- und hergehende, temperierte Preßwerkzeuge 16, 17 gebildet. Dadurch werden die Schlauchabschnitte 6 an beiden Enden abdichtend verschweißt.

In dem Ausführungsbeispiel von Fig. 4 (Einzelheit Z) wird der Strang 5 zwischen zwei gegenläufigen, mit Druck- und Schweißwerkzeugen 18, 19 besetzten Raupen 20, 21 transportiert und an vorgegebenen Stellen mit Einschnürungen 14 versehen und an diesen Stellen verschweißt. Es entstehen wie im Ausführungsbeispiel von Fig. 3 an beiden Enden dichtend verschweißte Schlauchabschnitte 6', die über die verschweißten Einschnürungen 14 zusammenhängen und so weiterhin einen endlosen Strang bilden.

Der kontinuierlich hergestellte, endlose Strang 5 aus PCM-gefüllten Schlauchabschnitten 6 wird über Umlenkrollen 22, 23 durch eine Kühleinrichtung 24 und von der Station 1 über die mit Transporteinrichtungen 25, 26 versehene Station 2 entweder zur Station 3 oder zur Station 4 geführt. In Station 3 wird je nach gewünschtem Produkt eine Aufteilung des Stranges 5 in einzelne Schlauchabschnitte 6 vorgenommen, indem die Einschnürungen 14 zwischen den Schlauchabschnitten 6 durchtrennt werden. Oder der Strang 5 wird in Strangabschnitte, die aus einer Vielzahl weiterhin zusammenhängender Schlauchabschnitte 6 bestehen, unterteilt. Der Strang 5 kann jedoch auch statt der Station 3 der Station 4 zum Aufwickeln auf einem Spulenkern 27 in einer Aufwickeleinrichtung 28 zugeführt werden. Je nach Verwendungszweck werden die so gebildeten Strangwickel an anderer Stelle weiterverarbeitet.

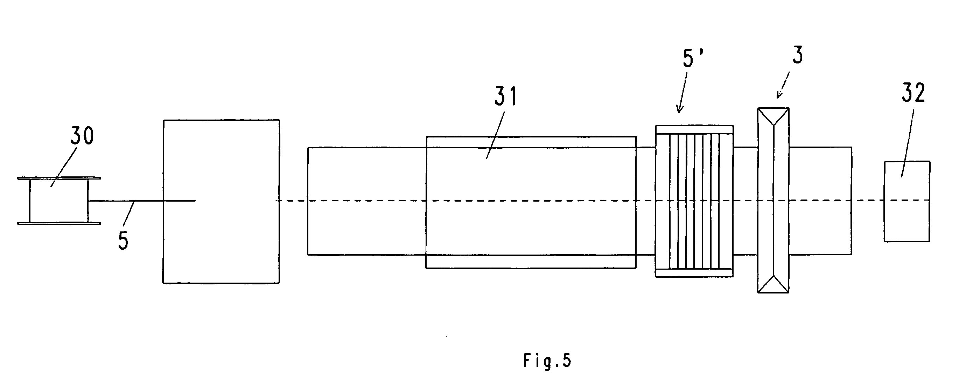

In dem Ausführungsbeispiel von Fig. 5 werden PCM-gefüllte Schlauchabschnitte in Form von Granulat hergestellt. Es werden mit einer flexiblen Kunststoffumhüllung versehene Stangen aus oder mit PCM oder ein Strangwickel 30 mit einer PCM-Füllung durch einen Durchlaufofen 31 zum Aufheizen des PCM-Materials sowie der Kunststoffumhüllung hindurch einer Preß- und Schweißstation 5' zugeführt. Dort wird der Strang 5 durch Herstellen und Verschweißen von Einschnürungen ebenfalls in Schlauchabschnitte unterteilt, die an beiden Enden abdichtend verschlossen sind. Wenn, wie im vorliegenden Fall, Granulat aus PCM-gefüllten Schlauchabschnitten hergestellt werden soll, wird eine entsprechend kurze Länge im Bereich von 3 bis 7 mm für die Schlauchabschnitte in der Station 5' gewählt, und auch die Querschnittsabmessungen des Stranges 5 sind möglichst gering. Sie liegen im Bereich von 3 bis 7 mm. Der aus PCM-gefüllten Schlauchabschnitten bestehende Strang 5 durchläuft anschließend die Schneidestation 3, wo die Schlauchabschnitte mit entsprechend kurzer Länge voneinander getrennt und anschließend als Granulat in einem Behälter 32 gesammelt werden.

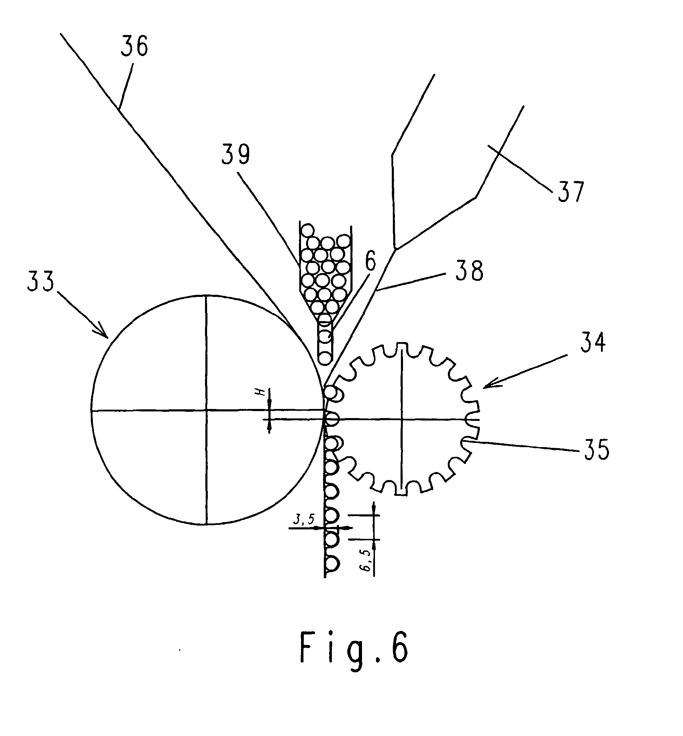

In dem Ausführungsbeispiel von Fig. 6 sind zwei Walzen, nämlich eine Zuführwalze 33 und eine Negativwalze 34 mit gleichmäßig am Umfang angeordneten Ausnehmungen 35, in der aus der Zeichnung ersichtlichen Weise, nämlich mit Höhenversatz H angeordnet. Ein endloses Vlies 36 läuft kontinuierlich als Trägermaterial dem Walzenspalt zu und wird hier mit einem aus einer Extruderdüse 37 ausgetragenen Film 38 zum Einbinden von aus einem Magazin 39 zugeführten PCM-gefüllten Schlauchabschnitten 6 in Röhrchenform zusammengeführt. Dabei werden die PCM-gefüllten Schlauchabschnitte 6 während des Zusammenführens in den Aufnahmeöffnungen 35 der Negativwalze 34 gehalten und geführt. Im Bereich des Walzenspaltes werden die Schlauchabschnitte 6 mit dem Film 38 aus der Extruderdüse 37 beschichtet, und der Film 38 wird an dem Vlies 36 zwischen den Schlauchabschnitten 6 verklebt. Durch diese Anordnung und gegenseitige Verbindung erhalten die Schlauchabschnitte 6 stets eine vorbestimmte Position an dem Vlies 36 sowie zueinander, und der Film 38 schützt und fixiert die PCM-gefüllten Schlauchabschnitte 6. Nur als typisches Beispiel sind die eingezeichneten Maßangaben von 3,5 mm für den Durchmesser der Schlauchabschnitte 6 und von 6,5 mm für ihren Mittenabstand zu verstehen. Das hergestellte bahn- oder streifenförmige Halbfertigprodukt läßt sich platzsparend aufwickeln und transportieren sowie leicht handhaben und auf die jeweils gewünschte Länge zuschneiden. Die Länge der Schlauchabschnitte 6 ist wählbar und hängt von der Einstellung der Herstellungsanlage ab, wie sie bspw. in Fig. 1 dargestellt ist. Größere Bahnbreiten lassen sich sowohl durch entsprechend lang bemessene Schlauchabschnitte 6 als auch dadurch erreichen, daß man eine entsprechend bemessene Walzenbreite einsetzt, z. B. mit einer breiten Zuführwalze 33 und einer oder mehreren nebeneinander angeordneten Negativwalzen 34 mit einer entsprechenden Anzahl von Magazinen 39 für die Zuführung der PCM-gefüllten Schlauchabschnitte 6 sowie mit einer entsprechenden Anzahl von Extruderdüsen 37 oder einer Extruderdüse 37 mit einer entsprechend lang bemessenen Düsenöffnung.

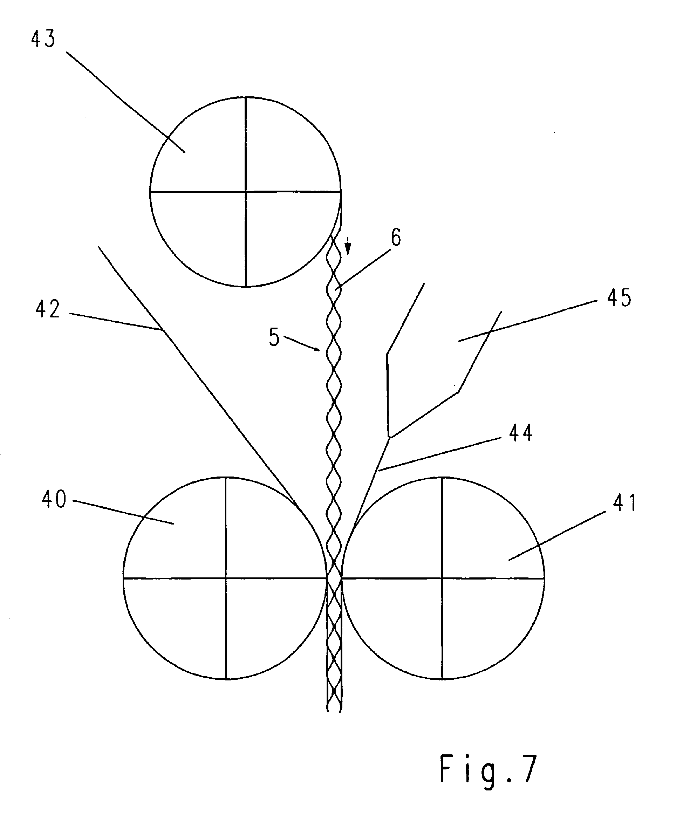

Bei dem weiteren Ausführungsbeispiel in Fig. 7 werden im Spalt von zwei in der aus der Zeichnung ersichtlichen Weise angeordneten Rillenwalzen 40, 41 ein endloses Vlies 42 und über eine Zuführwalze 43, die auch eine Abwickelwalze sein kann, ein oder mehrere Stränge 5 aus PCM-gefüllten Schlauchabschnitten 6, ausgebildet z. B. in einer Einrichtung, wie in Fig. 4 dargestellt, in den Walzenspalt geführt und auf der dem Vlies 42 abgewandten Seite mit einem Film 44 aus einer Extruderdüse 45, wie aus der Zeichnung ersichtlich, beschichtet. So wird eine endlose Bahn mit Einbindung PCM-gefüllter Schlauchabschnitte 6 hergestellt. Auch in diesem Beispiel sind durch eine entsprechende Bemessung der Breite der Walzen sowie der Anzahl parallel nebeneinander angeordneter Abwickelwalzen für die Stränge 5 etc. verschieden breite Bahnen herstellbar, bei denen eine entsprechende Anzahl von Strängen bzw. Schnüren 5 aus PCM-gefüllten Schlauchabschnitten 6 nebeneinander anzuordnen ist.

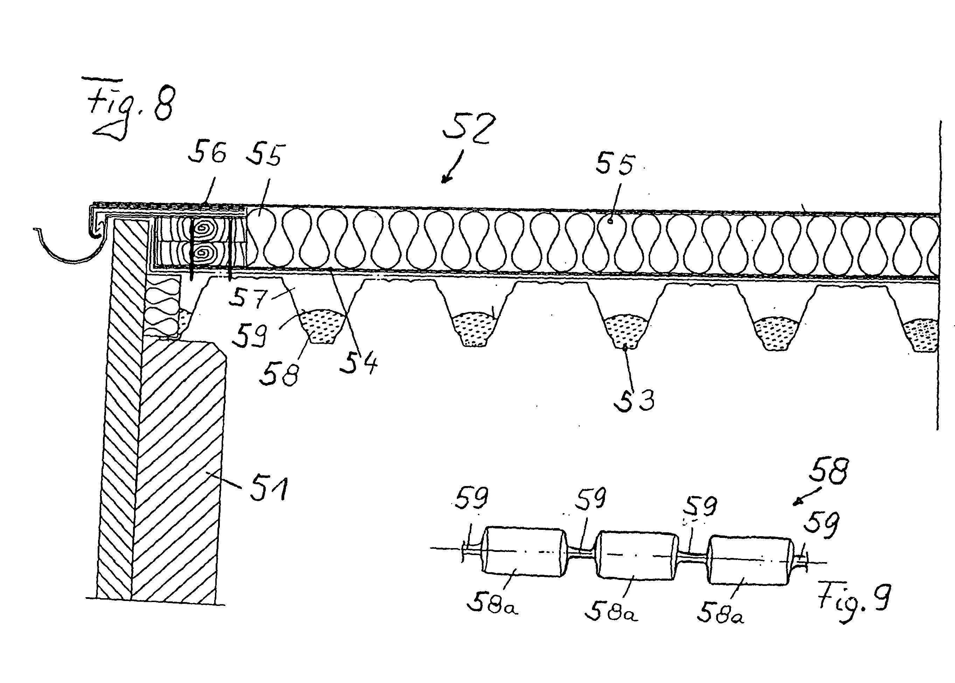

Der in Fig. 8 im Querschnitt dargestellte Gebäudeteil einer Leichtbaukonstruktion weist einen Wandteil 51 auf, auf dem ein Flachdach 52 mit geringer Neigung ruht. Das Flachdach 52 weist an seiner Unterseite ein Trapezprofil 53 aus Blech und über diesem eine Wärmedämmung 55 mit einer Dampfsperre 54 zwischen dem Trapezprofil 53 und der Wärmedämmung 55 und als oberen Abschluß eine Dachdichtungsbahn 56 auf.

In Hohlräume bzw. Tiefsicken 57 des Trapezprofils 53 sind Elemente 58 aus PCM eingelegt, die in diesem Ausführungsbeispiel einen etwa kreisförmigen Querschnitt und eine schlauchförmige Umhüllung 59 aus einer reißfesten, flüssigkeits- und diffusionsdichten Folie aufweisen. Die Elemente 58 sind vorzugsweise in einzelne Abschnitte 58a unterteilt, die gegeneinander abgedichtet und über Einschnürungen 59 des schlauchförmigen Umhüllungsmaterials miteinander verbunden sind, die sich jedoch leicht durchtrennen lassen, um die Elemente 58 auf einfache Weise ablängen zu können. Die Elemente 58 legt man zweckmäßiger Weise vor Ort in die Tiefsicken 57 ein, wenn die Trapezprofile 53 montiert sind. Es ist jedoch auch möglich, die Trapezprofile 53 bereits mit eingelegten Elementen 58 zu montieren. Es wurde schon weiter oben darauf hingewiesen, daß die Elemente 58 auch als starre Stangen oder Rohre aus PCM mit einer entsprechenden Ummantelung hergestellt sein können, die als ganzes in die Tiefsicken 57 bzw. vergleichbare Hohlräume eingelegt werden.

Das Element 58 weist eine flexible Umhüllung 59 auf, die sich Formänderungen des Elements 58 aus PCM anpaßt. Das Element 58 kann jedoch ebenso aus Granulat bestehen. In diesem Fall sind die Abschnitte 58a voneinander getrennt und in die Tiefsicken 57 eingefüllt.

Auf diese Weise wird der in den Tiefsicken 57 des Trapezprofils 53 zur Verfügung stehende Raum zur Aufnahme von PCM in Form von Elementen 58 bzw. 58a für die Aufnahme von Wärmeenergie genutzt. Die PCM-Elemente 58 bzw. 58a bewirken, wie bereits im Anfang der Beschreibung dargestellt wurde, an heißen Tagen im Sommer als Wärmespeicher eine Reduzierung der Temperatur in dieser Schicht bzw. unterhalb des Daches, während sie bei kühlen Nachttemperaturen Wärme abgeben, so daß ein ausgeglichenes Klima im Innenraum des Bauwerkes herbeigeführt wird. In die Tiefsicken 57 lassen sich auch die aus Fig. 7 ersichtlichen Schlauchabschnitte 6 einlegen. Wenn sich wie im vorliegenden Beispiel nicht Tiefsicken 57 zur Aufnahme von PCM-Elementen anbieten, können auch Bahnen mit Schlauchabschnitten 6, wie sie aus Fig. 6 hervorgehen, verwendet werden.

Als PCM für die Elemente 58 bzw. 58a kommen z. B. sowohl Paraffingemische wie EICOSAN, NONADECAN oder OKTADEKAN als auch Salze z. B. aus Calciumchloridhexahydrat oder Lithiumnitrat-Trihydrat in Betracht.

Als Kunststoff zur Herstellung des Schlauchs 12 bzw. des Stranges 5 bzw. der Schlauchabschnitte 6 (Fig. 1-7) und ebenso für die PCM-Elemente (58 bzw. 58a (Fig. 8 und 9)) kann z. B. für PCM auf Paraffinbasis Polyamid (PA) und im Falle der Verwendung eines PCM auf Salzbasis z. B. Polyethylen (HDPE) oder Polypropylen (PP) oder auch hier Polyamid (PA) verwendet werden.

## Patentansprüche

1. Verfahren zum Herstellen von Elementen aus oder mit latentwärmespeicherndem Material - nachfolgend mit der Abkürzung "PCM" bezeichnet -, die mit einem Schlauch versehen werden,
**dadurch gekennzeichnet, daß**
- der Schlauch aus einem Kunststoffmaterial extrudiert wird,
- PCM kontinuierlich oder taktweise zugeführt wird,
- PCM in den frisch extrudierten Schlauch eingefüllt bzw. eingeführt wird und
- der PCM-gefüllte Schlauch in Schlauchabschnitte unterteilt oder gespeichert, z.B. aufgespult wird.

2. Verfahren nach Anspruch 1, **dadurch gekennzeichnet, daß** PCM flüssig oder als Granulat oder als Strang stückweise oder endlos zugeführt wird.

3. Verfahren nach Ansprüch 1 oder 2, **dadurch gekennzeichnet, daß** der Schlauch nach Verlassen der Extruderdüse und vor dem Eintritt in eine Kühlzone mit PCM - vorzugsweise in flüssiger Form - gefüllt wird.

4. Verfahren nach einem der Ansprüche 1-3, **dadurch gekennzeichnet, daß** der PCM-gefüllte Schlauch aus Kunststoff zur Bildung der Schlauchabschnitte an vorgegebenen Stellen eingeschnürt und die Einschnürungen verschweißt werden.

5. Verfahren nach Anspruch 4, **dadurch gekennzeichnet, daß** der PCM-gefüllte Schlauch durch eine Presse geführt und die Einschnürungen und Verschweißungen mittels temperierter Preßwerkzeuge herbeigeführt werden.

6. Verfahren nach Anspruch 5, **dadurch gekennzeichnet, daß** der Schlauch taktweise mit hin- und hergehenden Preßwerkzeugen an den vorgegebenen Stellen eingeschnürt und verschweißt wird.

7. Verfahren nach Anspruch 5, **dadurch gekennzeichnet, daß** der Schlauch zwischen zwei gegenläufigen mit Druck- und Schweißwerkzeugen besetzten Raupen transportiert und an den vorgegebenen Stellen eingeschnürt und verschweißt wird.

8. Verfahren nach Anspruch 5, **dadurch gekennzeichnet, daß** der Schlauch zwischen zwei am Umfang mit Druck- und Schweißwerkzeugen besetzten Rädern transportiert und an den vorgegebenen Stellen eingeschnürt und verschweißt wird.

9. Verfahren nach Anspruch 4, **dadurch gekennzeichnet, daß** die PCM-gefüllten Schlauchabschnitte an den Engstellen so abgetrennt werden, daß die Enden der Schlauchabschnitte verschweißt bleiben.

10. Verfahren nach einem der Ansprüche 1-4, **dadurch gekennzeichnet, daß** aus von dem Strang abgetrennten Schlauchabschnitten ein Granulat aus PCM-gefüllten Kissen hergestellt wird.

11. Verfahren nach einem der Ansprüche 1-10, **dadurch gekennzeichnet, daß** einzelne oder als Strang zusammenhängende, PCM-gefüllte Schlauchabschnitte auf einem Träger z. B. einem Vlies aus Kunststoff oder auf einer Folie aus Kunststoff, die flexibel oder formstabil ist, befestigt werden.

12. Verfahren nach Anspruch 11, **dadurch gekennzeichnet, daß** die Schlauchabschnitte parallel nebeneinander an dem Vlies oder an der Folie angeordnet werden.

13. Verfahren nach einem der Ansprüche 1-10, **dadurch gekennzeichnet, daß** die PCM-gefüllten Schlauchabschnitte zwischen einem Vlies und einem Film angeordnet und befestigt werden.

14. Verfahren nach Anspruch 13, **dadurch gekennzeichnet, daß** ein endloses Vlies und ein endloser Strang aus PCM-gefüllten Schlauchabschnitten im Spalt eines Walzenpaares zusammengeführt und dort miteinander verbunden sowie auf der dem Vlies abgewandten Seite mit dem Film aus einer Extruderdüse beschichtet werden.

15. Verfahren nach Anspruch 13, **dadurch gekennzeichnet, daß** der Film jeweils über die Schlauchabschnitte bis zu dem Vlies gezogen und zwischen benachbarten Schlauchabschnitten an dem Vlies befestigt wird.

16. Verfahren nach Anspruch 13 oder 15, **dadurch gekennzeichnet, daß** ein Vlies einzeln aus einem Magazin zugeführte Schlauchabschnitte im Spalt eines Walzenpaares zusammenführt und die Schlauchabschnitte dort mit dem Film aus einer Extruderdüse beschichtet und durch Verkleben des Films an dem Vlies zwischen den Schlauchabschnitten fixiert werden.

17. Element aus oder mit latentwärmespeicherndem Material - nachfolgend mit der Abkürzung "PCM" bezeichnet -, das insbesondere nach dem Verfahren nach einem oder mehreren der Ansprüche 1-16 hergestellt ist, **dadurch gekennzeichnet, daß**
- das Element aus einem endlosen PCM-gefüllten Schlauch aus Kunststoff als reißfeste, flüssigkeits- und diffusionsdichte Umhüllung hergestellt; und
- als ein Abschnitt einer in Abschnitte unterteilbaren Stranges Fertig- oder als Halbfertigprodukt insbesondere für Bauzwecke ausgebildet ist,
- wobei der Abschnitt ein einzeln abgeteiltes und abgedichtetes Element bildet.

18. Element nach Anspruch 17, **dadurch** gekenntzeichnet, daß der PCM-gefüllte Schlauch zur Bildung von Schlauchabschnitten in vorgegebenen Abständen eingeschnürt und verschweißt ist, die einen zusammenhängenden Strang bilden.

19. Element nach Anspruch 18, **dadurch gekennzeichnet, daß** die Schlauchabschnitte ein Granulat aus PCM-gefüllten Kissen bilden.

20. Element nach einem der Ansprüche 17-19, **dadurch gekennzeichnet, daß** einzelne oder als Strang zusammenhängende, PCM-gefüllte Schlauchabschnitte auf einem Träger z. B. einem Vlies aus Kunststoff oder auf einer Folie aus Kunststoff, die flexibel oder formstabil ist, befestigt sind.

21. Element nach einem der Ansprüche 17-20, **dadurch gekennzeichnet, daß** die Phasenumwandlungstemperatur des PCM dem Einsatzzweck angepaßt ist, vorzugsweise im Bereich von 15 - 40°C, insbesondere im Bereich von 20 - 35°C liegt.

22. Element nach einem der Ansprüche 17-21, **dadurch gekennzeichnet, daß** die Umhüllung flexibel insbesondere ballon- oder schlauchförmig ist und Formänderungen der Elemente aus PCM im pulverförmigen, körnigen, flüssigen oder pastösen Zustand zuläßt.

23. Element nach einem der Ansprüche 17-22, **dadurch gekennzeichnet, daß** die Umhüllung mehrschichtig ist.

24. Element nach einem der Ansprüche 17-23, **dadurch gekennzeichnet, daß** das PCM eine möglichst hohe Phasenumwandlungswärme von min. 50 KJ/kg aufweist

25. Element nach einem der Ansprüche 17-24, **dadurch gekennzeichnet, daß** das PCM aus einem Paraffingemisch wie EICOSAN, NONADECAN oder OKTADEKAN besteht.

26. Element nach einem der Ansprüche 17-24, **dadurch gekennzeichnet, daß** das PCM aus einem Salz, Salzhydrat z. B. aus Calciumchloridhexahydrat oder Lithiumnitrat-Trihydrat besteht.

## Claims

1. Process for the production of elements made from or comprising latent heat storing material - abbreviated in the following as PCM -, which are provided with a tube,
**characterised in that**
- the tube is extruded from a plastic material,
- PCM is fed continuously or intermittently,
- PCM is filled or fed in the freshly extruded tube and
- the PCM-filled tube is subdivided into tube sections or is stored, for example coiled up.

2. Process according to claim 1, **characterised in that** PCM is fed in liquid or granular form or as a strand in sections or in endless form.

3. Process according to claim 1 or 2, **characterised in that** the tube, after leaving the extruder nozzle and prior to entry into a cooling zone, is filled with PCM - preferably in liquid form.

4. Process according to claims 1 - 3, **characterised in that** the PCM-filled tube made of plastics is constricted at predetermined locations in order to form tube sections and that the constrictions are heat sealed.

5. Process according to claim 4, **characterised in that** the PCM-filled tube is passed through a press and that the constrictions and heat sealing are performed by heated pressing tools.

6. Method according to claim 5, **characterised in that** the tube is constricted and heat sealed at the predetermined locations one by one by reciprocating pressing tools.

7. Process according to claim 5, **characterised in that** the tube is transported between two counter-revolving endless belts equipped with pressure and heat sealing tools and constricted and heat sealed at the predetermined locations.

8. Process according to claim 5, **characterised in that** the tube is transported between two wheels equipped on the periphery with pressure and heat sealing tools and is constricted and heat sealed at the predetermined locations.

9. Process according to claim 4, **characterised in that** the PCM-filled tube sections are so severed at the narrow points that the ends of the tube sections remain sealed.

10. Process according to any one of claims 1-4, **characterised in that** a granular material consisting of PCM-filled cushions is manufactured from the strand of separated tube sections.

11. Process according to any one of claims 1- 10, **characterised in that** PCM-filled tube sections individually or interconnected as a strand are affixed to a carrier, for example a plastics non-woven fabric or to a plastics foil, which is flexible or rigid.

12. Process according to claim 11, **characterised in that** the tube sections are arranged parallel side-by-side on the non-woven fabric or on the foil.

13. Process according to one of the claims 1- 10, **characterised in that** the PCM-filled tube sections are arranged and fixed between a non-woven fabric and a film.

14. Process according to claim 13, **characterised in that** an endless non-woven fabric and an endless strand of PCM-filled tube sections are brought together in the nip of a roller pair and are interconnected there as well as coated with the film from an extruder nozzle on the side facing away from the non-woven fabric.

15. Process according to claim 13, **characterised in that** the film is in each case drawn over the tube sections up to the non-woven fabric and fixed on the non-woven fabric between adjacent tube sections.

16. Process according to claim 13 or 15, **characterised in that** a non-woven fabric brings together tube sections individually fed from a hopper in the nip of a roller pair and that the tube sections are coated there with the film from an extruder nozzle and fixed between the tube sections by adhesively bonding the film to the non-woven fabric.

17. Element consisting of or comprising latent heat storing material - abbreviated in the following as "PCM" - manufactured, in particular, according to the method according to one or more of claims 1 - 16,
**characterised in that**
- the element is manufactured from an endless PCM-filled plastic tube as a tear-resistant, impervious and diffusion-proof sheathing and
- is designed as a section of a strand to be subdivided into sections as a finished or semi-finished product in particular for construction purposes,
- whereas the section forms an individually separated and sealed element.

18. Element according to claim 17, **characterised in that** the PCM-filled tube is constricted and heat sealed at predetermined intervals in order to form tube sections, forming a coherent strand.

19. Element according to claim 18, **characterised in that** the tube sections form a granular material consisting of PCM-filled cushions.

20. Element according to any one of claims 17 - 19, **characterised in that** PCM-filled tube sections individually or forming a continuous strand are affixed to a carrier, for example a non-woven fabric of plastics or to a plastics foil which is flexible or rigid.

21. Element according to any one of claims 17 - 20, **characterised in that** the phase change temperature of the PCM is adapted to the intended use, being preferably in the range of 15 - 40°C, in particular in the range of 20 - 35°C.

22. Element according to any one of claims 17 - 21, **characterised in that** the sheathing is flexible, in particular, balloon-like or tubular and permits shape variations of the elements consisting of PCM in a pulverised, granular, liquid or paste-like state.

23. Element according to any one of claims 17 - 22, **characterised in that** the sheathing is multi-layered.

24. Element according to any one of claims 17 - 23, **characterised in that** the PCM possesses the highest possible phase change heat of at least 50KJ/kg.

25. Element according to any one of claims 17 - 24, **characterised in that** the PCM consists of a paraffin mixture such as eicosane, nonadecane or oktadecane.

26. Element according to any one of claims 17 - 24, **characterised in that** the PCM consists of a salt, salt hydrate, e.g. of calcium chloride hexahydrate or lithium nitrate-trihydrate.

## Revendications

1. Procédé de fabrication d'éléments en ou avec du matériau stockant de la chaleur latente - désigné ci-dessous par l'abréviation "PCM" - qui sont pourvus d'un tuyau flexible,
**caractérisé en ce que**
- le tuyau flexible est extrudé en un matériau synthétique,
- du PCM est amené continuellement ou de manière cadencée,
- du PCM est rempli ou introduit dans le tuyau flexible qui vient d'être extrudé et
- le tuyau rempli de PCM est divisé ou stocké dans des sections de tuyau, par exemple est enroulé.

2. Procédé selon la revendication 1, **caractérisé en ce que** du PCM est amené liquide ou comme granulé ou comme boudin par pièces ou sans fin.

3. Procédé selon la revendication 1 ou 2, **caractérisé en ce que** le tuyau est rempli de PCM - de préférence sous forme liquide - après avoir quitté la tuyère d'extrudeuse et avant l'entrée dans une zone de refroidissement.

4. Procédé selon l'une des revendications 1 à 3, **caractérisé en ce que** le tuyau rempli de PCM en matière synthétique est serré à des endroits prédéfinis pour former les sections de tuyau et que les serrements sont soudés.

5. Procédé selon la revendication 4, **caractérisé en ce que** le tuyau rempli de PCM est guidé à travers une presse et les serrements et soudages sont amenés par des outils de compression tempérés.

6. Procédé selon la revendication 5, **caractérisé en ce que** le tuyau flexible est serré de manière cadencée avec des outils de compression en va-et-vient aux endroits prédéfinis et soudé.

7. Procédé selon la revendication 5, **caractérisé en ce que** le tuyau est transporté entre deux chenilles antagonistes équipées d'outils de pression et de soudage et est serré aux endroits prédéfinis et soudé.

8. Procédé selon la revendication 5, **caractérisé en ce que** le tuyau est transporté entre deux roues équipées sur la périphérie d'outils de pression et de soudage et est serré aux endroits prédéfinis et soudé.

9. Procédé selon la revendication 4, **caractérisé en ce que** les sections de tuyau remplies de PCM sont détachées aux endroits rétrécis de telle manière que les extrémités des sections de tuyau restent soudées.

10. Procédé selon l'une des revendications 1 à 4, **caractérisé en ce qu'**un granulé en coussins remplis de PCM est fabriqué à partir des sections de tuyau détachées du boudin.

11. Procédé selon l'une des revendications 1 à 10, **caractérisé en ce que** des sections de tuyau individuelles ou continues comme boudin, remplies de PCM, sont fixées sur un support, par exemple un intissé en matière synthétique ou sur une feuille en matière synthétique qui est flexible ou indéformable.

12. Procédé selon la revendication 11, **caractérisé en ce que** les sections de tuyau sont placées parallèlement l'une à côté de l'autre sur l'intissé ou sur la feuille.

13. Procédé selon l'une des revendications 1 à 10, **caractérisé en ce que** les sections de tuyau remplies de PCM sont placées et fixées entre un intissé et une pellicule.

14. Procédé selon la revendication 13, **caractérisé en ce qu'**un intissé sans fin et un boudin sans fin en sections de tuyau remplies de PCM sont réunis dans la fente d'une paire de rouleaux et y sont reliés l'un à l'autre et sont enduits sur le côté détourné de l'intissé avec la pellicule d'une tuyère d'extrudeuse.

15. Procédé selon la revendication 13, **caractérisé en ce que** la pellicule est étirée respectivement sur les sections de tuyau jusqu'à l'intissé et est fixée à l'intissé entre des sections de tuyau voisines.

16. Procédé selon la revendication 13 ou 15, **caractérisé en ce qu'**un intissé réunit individuellement des sections de tuyau amenées d'un stock dans la fente d'une paire de rouleaux et que les sections de tuyau y sont enduites avec la pellicule d'une tuyère d'extrudeuse et sont fixées entre les sections de tuyau en collant la pellicule à l'intissé.

17. Elément en ou avec du matériau stockant de la chaleur latente - désigné ci-dessous par l'abréviation "PCM" - qui est fabriqué en particulier selon le procédé selon une ou plusieurs revendications 1 à 16,
**caractérisé en ce que**
- l'élément est fabriqué à partir d'un tuyau sans fin en matière synthétique rempli de PCM comme enveloppe résistante à la déchirure, étanche au liquide et à la diffusion et
- est configuré comme une section d'un boudin pouvant être divisé en sections comme produit fini ou semi-fini en particulier pour le bâtiment,
- la section formant un élément séparé individuellement et rendu étanche.

18. Elément selon la revendication 17, **caractérisé en ce que** le tuyau rempli de PCM est serré à des écartements prédéfinis pour former des sections de tuyau et est soudé, ces sections formant un boudin cohérent.

19. Elément selon la revendication 18, **caractérisé en ce que** les sections de tuyau forment un granulé en coussins remplis de PCM.

20. Elément selon l'une des revendications 17 à 19, **caractérisé en ce que** des sections de tuyau remplies de PCM individuelles ou cohérentes comme boudin sont fixées sur un support, par exemple un intissé en matière synthétique ou sur une feuille en matière synthétique qui est flexible ou indéformable.

21. Elément selon l'une des revendications 17 à 20, **caractérisé en ce que** la température de transition de phase du PCM est adaptée au but d'utilisation, se situe de préférence dans la plage de 15 à 40° C, en particulier dans la plage de 20 à 35° C.

22. Elément selon l'une des revendications 17 à 21, **caractérisé en ce que** l'enveloppe est flexible, en particulier est en forme de ballon ou de tuyau flexible et permet des changements de forme des éléments en PCM à l'état poudreux, grenu, liquide ou pâteux.

23. Elément selon l'une des revendications 17 à 22, **caractérisé en ce que** l'enveloppe est en plusieurs couches.

24. Elément selon l'une des revendications 17 à 23, **caractérisé en ce que** le PCM présente une chaleur de transition de phase la plus élevée possible de 50 KJ/kg minimum.

25. Elément selon l'une des revendications 17 à 24, **caractérisé en ce que** le PCM est constitué par un mélange de paraffine comme EICOSAN, NONADECAN ou OKTADEKAN.

26. Elément selon l'une des revendications 17 à 24, **caractérisé en ce que** le PCM est constitué par un sel, un hydrate de sel, par exemple de l'hexahydrate de chlorure de calcium ou du nitrate de lithium trihydraté.
